# EUROPEAN PATENT APPLICATION

(11) **EP 4 557 557 A1**
(43) Date of publication of application: **21.05.2025**
(21) Application number: 23839531.3
(22) Date of filing: 04.07.2023
(51) Int. Cl.: H02J 3/38, G05F 1/00, H02J 3/32, H02J 7/35, H02J 13/00, H02M 3/00

(54) **POWER CONTROL DEVICE, POWER SYSTEM, METHOD FOR CONTROLLING POWER CONTROL DEVICE, AND METHOD FOR CONTROLLING CENTRAL CONTROL DEVICE**

(30) Priority: 13.07.2022 JP 2022112226
(71) Applicant: FURUKAWA ELECTRIC CO., LTD., Tokyo 100-8322 (JP)
(72) Inventor: ABE, Asuka, Tokyo 100-8322 (JP); RIKISO, Masahiro, Tokyo 100-8322 (JP)
(74) Representative: SSM Sandmair
(86) International application number: PCT/JP2023/024799
(87) International publication number: WO 2024/014359

(57) **Abstract**

A control based on a reference function is implemented while suppressing complexity of a power converter. A power control device is a power control device for controlling a power converter configured to convert an input power to output, and includes a setting unit configured to set a control mode of the power converter to either one of a constant voltage control, a constant current control, a constant power control, and an output stop according to an input value, and set a target value of output of the power converter corresponding to the control mode based on the control mode and a reference function defined according to an input value; and an output unit configured to output the control mode set by the setting unit and the target value set by the setting unit to the power converter.

## Description

### Field

The present invention relates to a power control device, a power system, a control method of a power control device, and a control method of a central control device.

### Background

As an alternative to large-scale power networks dependent on fossil fuels and nuclear energy, power networks utilizing locally produced and consumed electricity are gaining attention. To these power networks, which use locally produced and consumed electricity, a variety of devices such as a photovoltaic (PV) system, which is a power generation system generating electricity using renewable energy, a stationary energy storage system, and an electric vehicle (EV), are connected. Because the respective devices described above operate on a direct current (DC) power source, development of a power network based on direct current (DC grid) is being considered.

As a control method for the DC grid, there is, for example, a control method disclosed in Patent Literature 1. In this control method, a power converter connected to the respective devices described above is assigned a reference function based on its own power (P) and its own voltage (V), and the power converter then autonomously and distributively controls output based on the reference function, thereby controlling the DC grid. The reference function includes, for example, a reference function that imparts a drooping characteristic to the target voltage value based on the amount of power required by the DC bus, that is, a reference function having a droop characteristic (droop function). In the method described in Patent Literature 1, each power converter autonomously and distributively controls its output based on the droop function, and is thereby able to stabilize the voltage of the DC bus while implementing load sharing of power allocation among respective devices according to a power required by the DC bus.

### Citation List

### Patent Literature

Patent Literature 1: JP-A-2022-72320

### Summary

### Technical Problem

The power converter disclosed in Patent Literature 1 stores the droop function, and controls input and output to the DC bus by controlling a power conversion unit that performs power conversion between the device and the DC bus by a control unit based on a stored reference function. That is, this power converter is required to have a storage unit that stores the droop function and a control function based on the droop function, and this makes the overall configuration of the power converter complex. Therefore, efforts are necessary for manufacturing and maintenance.

The present invention has been achieved in view of the above problems, and it is an object of the present invention to achieve control based on a reference function while suppressing complexity of a power converter.

### Solution to Problem

A power control device according to one aspect of the present invention controls a power converter configured to convert an input power to output, and includes: a setting unit configured to set a control mode of the power converter to either one of a constant voltage control, a constant current control, a constant power control, and an output stop according to an input value, and set a target value of output of the power converter corresponding to the control mode based on the control mode and a reference function defined according to an input value; and an output unit configured to output the control mode set by the setting unit and the target value set by the setting unit to the power converter.

In the power control device according to one aspect of the present invention, the setting unit may be configured to set the control mode based on a control area a control area defining a range of voltage, current, and power for performing any one of the constant voltage control, the constant current control, the constant power control, and the output stop corresponding to the reference function based on an input value, and the control area may be set to suppress a disturbance of the input value.

In the power control device according to one aspect of the present invention, the control area may be defined to suppress reduction of efficiency of the power converter.

In the power control device according to one aspect of the present invention, the setting unit may be configured to suppress the reduction of efficiency of the power converter by setting the control mode to the output stop.

The power control device according to one aspect of the present invention may include a communication unit configured to acquire control information indicating a control method of the power converter from an external device, and a target value of output of the power converter, and when the control method indicated by the control information is either the constant power control or the constant current control, the setting unit may be configured to set the control mode to the control method indicated by the control information, and the output unit may be configured to output the target value acquired by the communication unit and the set control mode to the power converter.

The power control device according to one aspect of the present invention may include an area setting unit configured to set a control area defining a range of voltage, current, and power for performing any one of the constant voltage control, the constant current control, the constant power control, and the output stop corresponding to the reference function based on an input value, wherein when the control method indicated by the control information is the constant voltage control, the setting unit may be configured to set a control mode defined in the control area corresponding to the target value and a target value determined based on the reference function, and the output unit may be configured to output the set control mode and the target value to the power converter.

A power system according to one aspect of the present invention includes: the power control device; and a power converter configured to acquire the control mode and the target value from the power control device, perform a control according to the acquired control based on the acquired target value when the acquired control mode is any one of the constant voltage control and the constant power control, and stop output when the control mode is the output stop.

A control method according to one aspect of the present invention of a power control device for converting an input power to output includes: a setting step of setting a control mode of the power converter to either one of a constant voltage control, a constant current control, a constant power control, and an output stop according to an input value, and setting a target value of output of the power converter corresponding to the control mode based on the control mode and a reference function defined according to an input value; and an output step of outputting the control mode set at the setting step and the target value set at the setting step to the power converter.

A control method according to one aspect of the present invention controls a central control device for controlling a power control device of a power converter configured to convert an input power to output, wherein the power control device includes a setting unit configured to set a control mode of the power converter to either one of a constant voltage control, a constant current control, a constant power control, and an output stop according to an input value, and set a target value of output of the power converter corresponding to the control mode based on the control mode and a reference function defined according to an input value; and an output unit configured to output the control mode set by the setting unit and the target value set by the setting unit to the power converter, and includes a step of outputting the reference function to the power control device by the central control device. Advantageous Effects of Invention

According to the present invention, it is possible to achieve control based on a reference function while suppressing complexity of a power converter.

### Brief Description of Drawings

FIG. 1 is a diagram illustrating a configuration of a power system according to an embodiment.
FIG. 2 is a diagram illustrating a configuration of a power converter.
FIG. 3 is a diagram illustrating a configuration of a functional unit of the power converter.
FIG. 4 is a diagram illustrating a configuration of a power control device.
FIG. 5 is a diagram illustrating an example of a reference function and a control area control area.
FIG. 6 is a diagram illustrating an example of a reference function and a control area control area.
FIG. 7 is a diagram illustrating an example of a reference function and a control area control area.
FIG. 8 is a flowchart illustrating a flow of processing performed by a control unit of the power control device.
FIG. 9 is a diagram illustrating an example of a reference function and a control area control area.
FIG. 10 is a sequence diagram illustrating an example of a control method of the power system.
FIG. 11 is a diagram illustrating a configuration of a power control device according to a second embodiment.
FIG. 12 is a flowchart illustrating a flow of processing performed by the control unit of the power control device.
FIG. 13A is a diagram illustrating an example of a reference function.
FIG. 13B is a diagram illustrating an example of a reference function and a control area.
FIG. 14A is a diagram illustrating an example of a reference function, control area, and an operating point.
FIG. 14B is a diagram illustrating an example of a reference function, control area, and an operating point.
FIG. 15A is a diagram illustrating an example of a reference function, control area, and an operating point.
FIG. 15B is a diagram illustrating an example of a reference function, control area, and an operating point.
FIG. 16A is a diagram illustrating an example of a reference function, control area, and an operating point.
FIG. 16B is a diagram illustrating an example of a reference function, control area, and an operating point.
FIG. 17A is a diagram illustrating an example of the reference function.
FIG. 17B is a diagram illustrating an example of a reference function and control area.
FIG. 18A is a diagram illustrating an example of the reference function.
FIG. 18B is a diagram illustrating an example of a reference function and a control area.
FIG. 19A is a diagram illustrating an example of the reference function.
FIG. 19B is a diagram illustrating an example of the reference function and the control area.
FIG. 20A is a diagram illustrating an example of the reference function.
FIG. 20B is a diagram illustrating an example of the reference function and the control area.
FIG. 21A is a diagram illustrating an example of the reference function.
FIG. 21B is a diagram illustrating an example of the reference function and the control area.
FIG. 22A is a diagram illustrating an example of the reference function.
FIG. 22B is a diagram illustrating an example of the reference function and the control area.

### Description of Embodiments

Hereinafter, embodiments of the present invention will be explained with reference to the drawings. The present invention is not limited to the embodiments explained below. Furthermore, identical reference symbols are assigned identical component appropriately in the drawings.

### First Embodiment

### Configuration of Power System

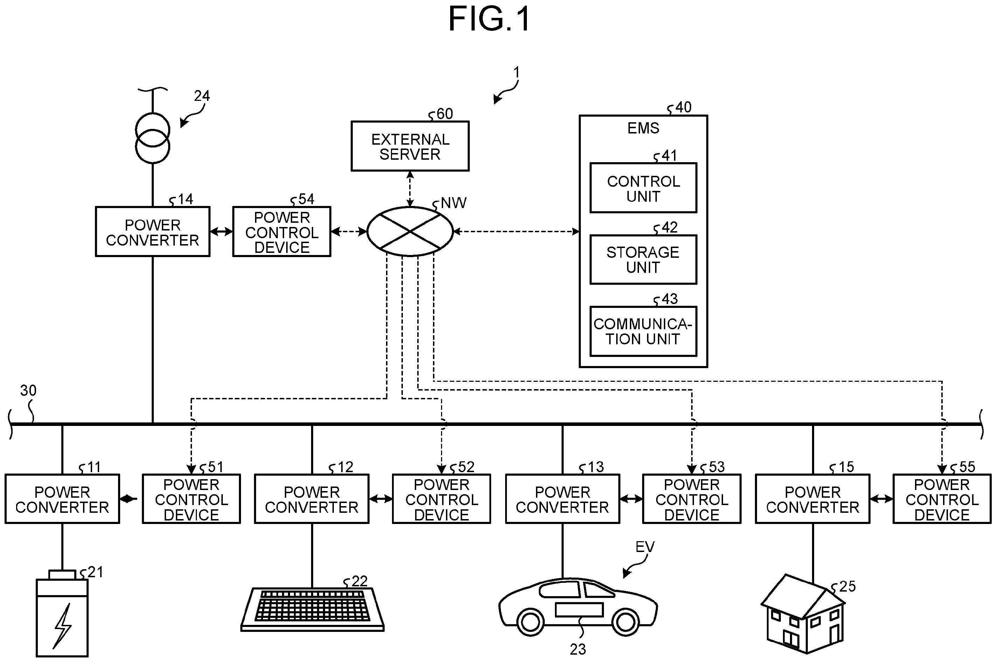

FIG. 1 is a diagram illustrating a configuration of a power system according to an embodiment. A power system 1 includes power converters 11 to 15, a power elements 21 to 25, power control devices 51 to 55, and a bus 30. Furthermore, the power system 1 includes an energy management system (EMS) 40. The EMS 40 is one example of a central control device.

The power converters 11 to 13 and 15 are DC/DC converters that convert direct current voltage. The power converter 14 is a AC/DC converter that performs conversion between direct current voltage and alternating current voltage. The power converters 11 to 15 can be implemented by using commercially available power converters. Output of power converter 11 is controlled by power control device 51, output of power converter 12 is controlled by power control device 52, and output of power converter 13 is controlled by power control device 53. Moreover, the output of power converter 14 is controlled by power control device 54, and the output of power converter 15 is controlled by power control device 55.

The bus 30 is a DC bus in the power system 1, and the power converters 11 to 15 are connected thereto. In the power system 1, a power network is configured that includes a direct current grid composed of the bus 30, the power converters 11 to 15, and the power elements 21 to 25.

The power element 21 is, for example, a stationary battery storage device capable of charging and discharging electricity, and is connected to the power converter 11. The stationary battery storage device is one example of a permanently installed storage device in a facility. The power converter 11 has a function of converting a voltage of a direct current power supplied by the power element 21 to output to the bus 30, and of converting a voltage of a direct current power supplied from the bus 30 to output to the power element 21 for charging. The output of power converter 11 is controlled by the power control device 51. The power control device 51 has a function of performing data communication wirelessly or wiredly. The power control device 51 communicates with the EMS 40 and power converter 11, and controls output of the power converter 11 based on a reference function transmitted from the EMS 40 and stored.

The power element 22 is, for example, a photovoltaic (PV) system capable of generating and supplying electricity, and is connected to the power converter 12. The photovoltaic system is an example of a power generation device that generates power using renewable energy. The power converter 12 has the function of converting a voltage of a direct current power supplied by the power element 22 to output to the bus 30. The output of power converter 12 is controlled by the power control unit 52. The power control device 52 has a function of performing data communication wiredly or wirelessly. The power control device 52 communicates with the EMS 40 and the power converter 12, and controls output of the power converter 12 based on a reference function transmitted from the EMS 40 and stored.

The power element 23 is, for example, an in-car energy storage device capable of supplying, consuming, and charging power, and it is connected to the power converter 13. The in-car energy storage device is installed in an electric vehicle EV and is an example of a mobile, non-stationary energy storage device. The power converter 13 has the function of converting a voltage of the direct current power supplied by the power element 23 to output to the bus 30, and of converting a voltage of the direct current power supplied from the bus 30 to output to the power element 23 for charging. The power converter 13 may be installed, for example, in a charging station or residential charging equipment, but it may also be mounted in the electric vehicle EV. Output of power converter 13 is controlled by the power control device 53. The power control device 53 has the function of performing data communication wiredly or wirelessly. The power control device 53 communicates with the EMS 40 and the power converter 13, and controls the output of power converter 13 based on a reference function transmitted from the EMS 40 and stored.

The power element 24 is, for example, a commercial power grid, and it is connected to the power converter 14. The power converter 14 converts an alternating current power supplied by the power element 24 into a direct current power to output to the bus 30, and converts a direct current power supplied from the bus 30 into an alternating current power to output to the power element 24. The output of the power from the bus 30 to the power element 24 is also referred to as reverse power flow. The output of power converter 14 is controlled by the power control device 54. The power control device 54 has a function of performing data communication wiredly or wirelessly. The power control device 54 communicates with the EMS 40 and the power converter 14, and controls the output of the power converter 14 based on a reference function transmitted from the EMS 40 and stored.

The power element 25 is, for example, a Net Zero Energy House (ZEH) capable of supplying, consuming, and charging power, and is connected to the power converter 15. A ZEH typically includes a solar power generation system, an energy storage battery, and electrical appliances, such as an air conditioner and a refrigerator, which are power loads. The power converter 15 has a function of converting the voltage of a direct current power supplied by the power element 25 to output to the bus 30, and of converting a voltage of a direct current power supplied from the bus 30 to output to the power element 25, and charging the energy storage battery and operating the power loads. The power control device 55 has the function of performing data communication wiredly or wirelessly. The power control device 55 communicates with the EMS 40 and the power converter 15, and controls the output of the power converter 15 based on a reference function transmitted from the EMS 40 and stored.

The EMS 40 has a function of managing a state of the power system 1 integratively. The EMS 40 includes a control unit 41, a storage unit 42, and a communication unit 43.

The control unit 41 is to perform various kinds of arithmetic processing to implement the function of the EMS 40, and is constituted of, for example, a processor, such as a central processing unit (CPU), an application specific integrated circuit (ASIC), a field programmable gate array (FPGA), a digital signal processor (DSP), and a graphics processing unit (GPU). A function of the control unit 41 is implemented as a functional unit as the control unit 41 reading various kinds of programs from the storage unit 42.

The storage unit 42 stores various kinds of programs and data to be used by the control unit 41 for performing arithmetic processing. For example, it is equipped with a red only memory (ROM). Moreover, the storage unit 42 includes, for example, a random access memory (RAM) that is used as work space when the control unit 41 performs the arithmetic processing, an area to store a result of the arithmetic processing of the control unit 41, and the like. The storage unit 42 may include an auxiliary storage device, such as a hard disk drive (HDD) and a solid state drive (SSD).

The communication unit 43 is constituted of a communication module that performs data communication wiredly or wirelessly. The communication unit 43 performs data communication with the power control devices 51 to 55 and an external server 60 through a network NW that is constituted of an Internet network, a mobile phone network, and the like.

The external server 60 is a server located outside the power system 1. The external server 60 is, for example, an information processing device configured to function as an EMS in another power system, or an information processing device that includes a database and that functions as a data server for the EMS 40. The external server 60 stores various kinds of information that can affect the operation of the power system 1.

### Configuration of Power Converter

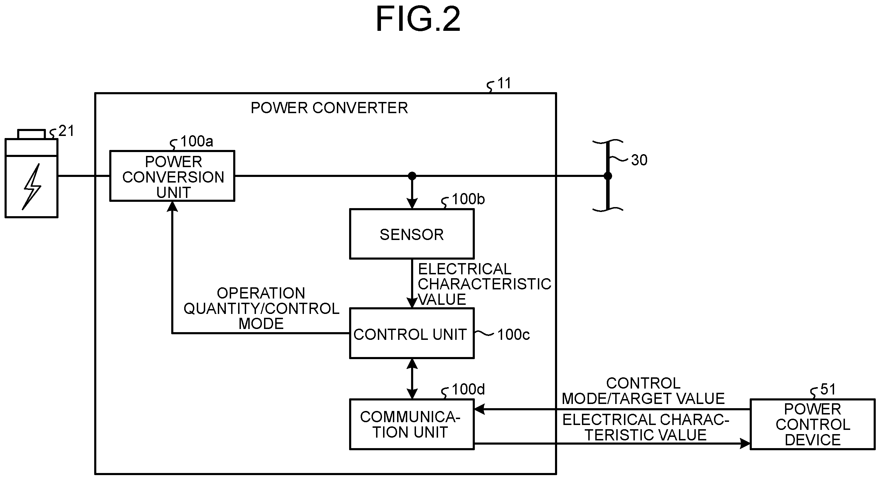

Next, a specific configuration of the power converter 11 will be explained. FIG. 2 is a diagram illustrating a configuration of the power converter 11. The power converter 11 includes a power conversion unit 100a, a sensor 100b, a control unit 100c, and a communication unit 100d.

The power conversion unit 100a performs DC/DC conversion in which a voltage of a direct current power input from the discharging power element 21 to output to the bus 30. The power conversion unit 100a can also convert a voltage of a direct current power input from the bus 30 to output to the power element 21, and charge the power element 21. The power conversion unit 100a is constituted of an electrical circuit, for example, including a coil, a capacitor, a diode, a switching element, and the like. The switching elements is, for example, a field-effect transistor or an insulated-gate bipolar transistor. The power conversion unit 100a can control power conversion characteristics, for example, by a pulse width modulation (PWM) control.

The sensor 100b measures the electrical characteristic values of the power on the bus 30 side of the power conversion unit 100a. Therefore, the sensor 100b measures the electrical characteristic values of the power input to the power converter 11 or output from the power converter 11. The sensor 100b can measure electrical characteristic values such as a current value, a voltage value, and a power value. The sensor 100b outputs the measured electrical characteristic values to the control unit 100c.

The communication unit 100d is constituted of a communication module that performs data communication wiredly or wirelessly and a communication control unit that controls operation of the communication module. The communication unit 100d performs data communication with the power control device 51 wiredly or wirelessly. For example, the communication unit 100d receives a control mode and a target value from the power control device 51, to output to the control unit 100c. Moreover, the communication unit 100d transmits the electrical characteristic value input from the control unit 100c to the power control device 51. The electrical characteristic value input to the communication unit 100d by the control unit 100c are electrical characteristic values obtained by the control unit 100c from the sensor 100b.

The control unit 100c is constituted of a processor that performs various kinds of arithmetic processing to control operation of the power conversion unit 100a, and a storage unit. The processor and the storage unit can be implemented using those exemplified as the control unit 41 and the storage unit 42, respectively. A function of the control unit 100c is implemented by the processor reading and executing various kinds of programs from the storage unit, as a functional unit.

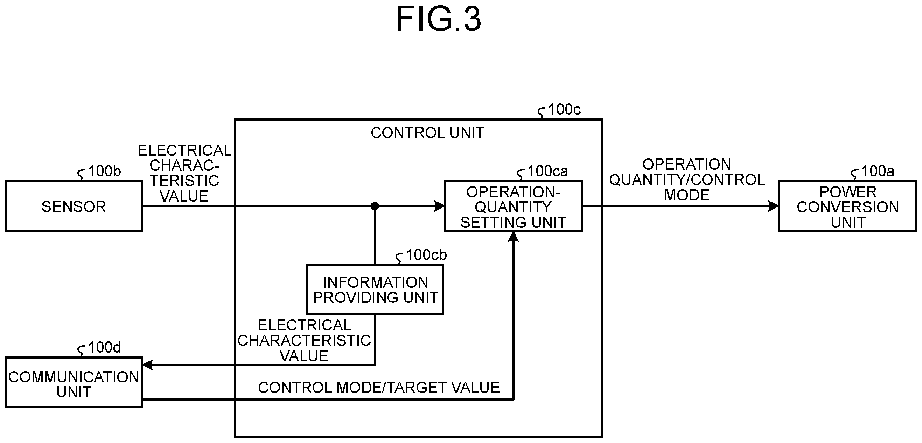

FIG. 3 is a diagram illustrating a functional unit according to the present invention implemented in the control unit 100c. The control unit 100c includes an operation-quantity setting unit 100ca and an information providing unit 100cb that are functional units implemented as software by executing a program. The information providing unit 100cb acquires the electrical characteristic value output from the sensor 100b, and outputs the acquired electrical characteristic value to the communication unit 100d.

The operation-quantity setting unit 100ca outputs the control mode received by the communication unit 100d from the power control device 51 to power conversion unit 100a. The control mode includes a constant power mode to control the output of the power conversion unit 100a to a target power value, a constant voltage mode to control the output of the power conversion unit 100a to a target voltage value, and a stop mode to stop the output of the power conversion unit 100a. Moreover, the operation-quantity setting unit 100ca performs feedback control to set an operation quantity (for example, duty ratio) for the PWM control such that a difference between the electrical characteristic value measured by the sensor 100b and the target value received by the communication unit 100d from the power control device 51 is within a predetermined range. The target value is, for example, a voltage value or a power value. The operation-quantity setting unit 100ca outputs information of the set operation quantity to the power conversion unit 100a, to control the power conversion unit 100a. The feedback control performed by the operation-quantity setting unit 100ca can be performed using a publicly known method, such as PID control executed by reading parameters including proportional gain, integral time, derivative time and the like previously stored in the storage unit.

The other power converters 12, 13, 14, and 15 may have the same configuration as the power converter 11. However, the power conversion unit 100a of the power converter 14 performs AC/DC conversion in which an alternating current power supplied from the power element 24 is converted into a direct current power, to output to the bus 30, and DC/AC conversion in which a direct current power supplied from the bus 30 is converted into an alternating current power, to output to the power element 24.

### Configuration of Power Control Device

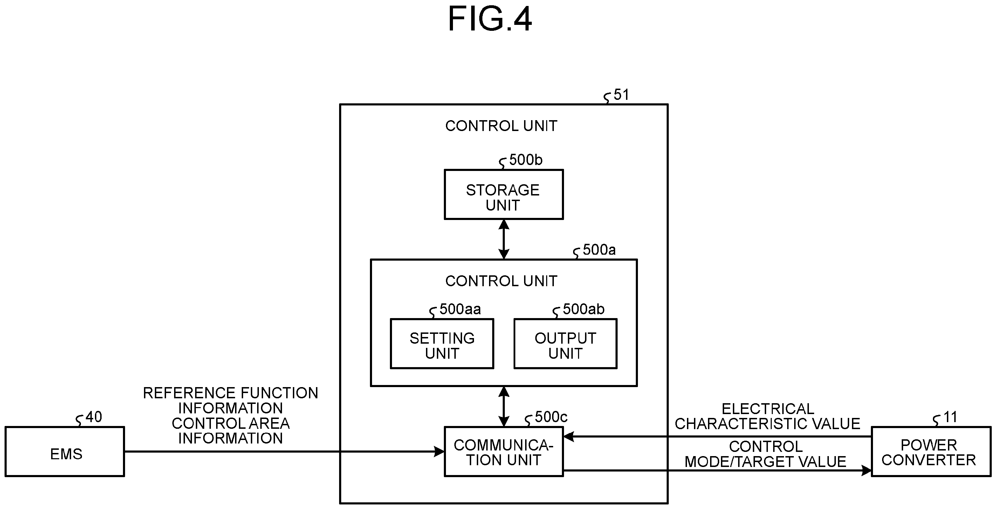

Next, a specific configuration of the power control device 51 will be explained. FIG. 4 is a diagram illustrating a configuration of the power control device 51. The power control device 51 includes a control unit 500a, a storage unit 500b, and a communication unit 500c.

The communication unit 500c is constituted of a communication module that performs data communication wiredly or wirelessly, and a communication control unit that controls operation of the communication module. The communication unit 500c communicates with power converter 11 via wiredly or wirelessly. For example, the communication unit 500c transmits control mode or target value to the power converter 11 and outputs the electrical characteristic value transmitted from the power converter 11 to control unit 500a. Furthermore, the communication unit 500c communicates with the EMS 40 through the network NW. The communication unit 500c transmits, to the EMS 40, the electrical characteristic value transmitted from the power converter 11, and receives reference function information and control area information transmitted from the EMS 40. The reference function information and the control area information received by the communication unit 500c are stored in the storage unit 500b. The reference function information corresponds to various kinds of information to identify a droop function constituting the reference function. The control area information is information to specify the control mode of the power converter 11.

The storage unit 500b includes a non-volatile memory and stores the reference function information and the control area information received by the communication unit 500c. Moreover, the storage unit 500b stores a program executed by the control unit 500a.

The control unit 500a is constituted of a processor that performs various kinds of arithmetic processing to control operation of the power control device 51. The processor can be implemented using the one exemplified as a configuration of the control unit 41. A function of the control unit 500a are implemented as a functional unit by executing various programs read by the processor from the storage unit 500b. For example, the control unit 500a determines a target value of output of the power converter 11 and the control mode of the power converter 11 based on the reference function information stored in the storage unit 500b, the control area information stored in the storage unit 500b, and the electrical characteristic value transmitted from the power converter 11.

The control unit 500a includes a setting unit 500aa and an output unit 500ab that are functional units implemented as software by executing a program. The setting unit 500aa sets the control mode of power converter 11 based on the electrical characteristic value acquired from the power converter 11 and the control area information stored in the storage unit 500b. Moreover, the setting unit 500aa sets the target value of output of the power conversion unit 100a based on the reference function information and the control area information stored in the storage unit 500b, and the electrical characteristic value received by communication unit 500c. The output unit 500ab outputs the control mode and the target value set by the setting unit 500aa to the power converter 11.

The other power control devices 52 to 55 may have the same configuration as the power control device 51. However, the reference function information and the control area information transmitted from the EMS 40 and stored in the storage unit 500b will be different information depending on a connected power element.

### Characteristics of Reference Function

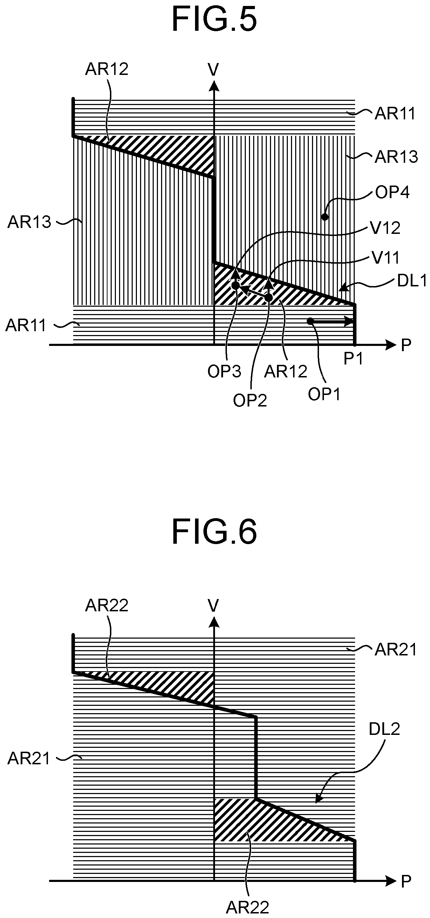

Next, the reference function information and the control area information to be the basis for controlling the power converter 11 by the power control device 51 will be explained. FIG. 5 illustrates an example of the reference function indicated by the reference function information and the control area indicated by the control area information.

FIG. 5 is a diagram illustrating an example of the reference function and the control area to be the basis for controlling the power converter 11, and a vertical axis is for voltage V, and a horizontal axis is for power P. The reference function in FIG. 5 indicates V-P characteristic that represents a relationship between the power P and the voltage V on the bus 30 side of the power conversion unit 100a included in the power converter 11, and indicates the power conversion characteristic of the power conversion unit 100a that is controlled by the power control device 51. The power P takes a positive value when the power conversion unit 100a supplies power to the bus 30, that is, when the power element 21 is in a discharging state, and takes a negative value when power is supplied from the bus 30, that is, when the power element 21 is in a charging state.

The reference function represented by a line DL1 bent in the middle illustrated in FIG. 5 is composed of multiple droop functions connected that are defined for a specific range of input value, and that have different droop characteristics from one another. Specifically, the line DL1 is composed of five droop functions connected, each of which has a different droop characteristic, and is identified by the reference function information. The reference function information includes coordinate information of a boundary of a droop function, for example, in a coordinate system with P on a horizontal axis and V on a vertical axis, intercept information of the droop function, slope information (that is, droop coefficient), and shape information (straight line, curve, and the like).

The control unit 500a of the power control device 51 controls the power conversion characteristic of the power converter 11 so as to have a characteristic of the reference function indicated by the line DL1. That is, the control unit 500a of the power control device 51 controls the power converter 11 such that an operating point defined by a value of the voltage V and a value of the power P, which are the electrical characteristic values on the bus 30 side of the power conversion unit 100a, is positioned on the line DL1.

The control method executed by the control unit 500a includes a droop P control and a droop V control. The droop P control is a control method in which a target power value Pref, which is a target value, is determined based on a voltage value Vo that is the electrical characteristic received by the communication unit 500c and the reference function, and in which a difference between a measurement value of the power by the sensor 100b and the target power value Pref is controlled to fall within an allowable range. The droop V control is a control method in which a target voltage value Vref, which is a target value, is determined based on a power value Po, which is the electrical characteristic received by the communication unit 500c, and the reference function, and in which a difference between a measurement value of the voltage by the sensor 100b and the target voltage value Vref is controlled to fall within the allowable range.

A control area defines the control method to be performed according to the position of the operating point, and defines a range of a voltage and a power for performing the corresponding droop P control, droop V control, or output stop for each reference function. Specifically, the control area is set according to the range of the power P and the voltage V, and in the example in FIG. 5, areas AR11, AR12, and AR13 are set. The area AR11 is a region in which the droop P control is performed to position the operating point on the line DL1, while the area AR12 is a region in which the droop V control is performed to position the operating point on the line DL1. Furthermore, the area AR13 is a region in which output from the power conversion unit 100a is stopped.

FIG. 6 is a diagram illustrating another example of the reference function and the control area to be the basis for controlling the power converter 11. The reference function represented by a line DL2 bent in the middle in FIG. 6 is composed of five droop functions connected that have different droop characteristics from one another, and are identified by the reference function information.

The control unit 500a of the power control device 51 controls the electrical conversion characteristic of the power converter 11 to be the characteristic of the reference function represented by the line DL2 when the reference function information is updated to the one transmitted from the EMS 40 and illustrated in FIG. 6. That is, the control unit 500a of the power control device 51 controls the power converter 11 such that the operating point is positioned on the line DL2.

In the example in FIG. 6, areas AR21 and AR22 are set. The area AR21 is a region in which the droop P control is performed to position the operating point on the line DL2, while the area AR22 is a region in which the droop V control is performed to position the operating point on the line DL2.

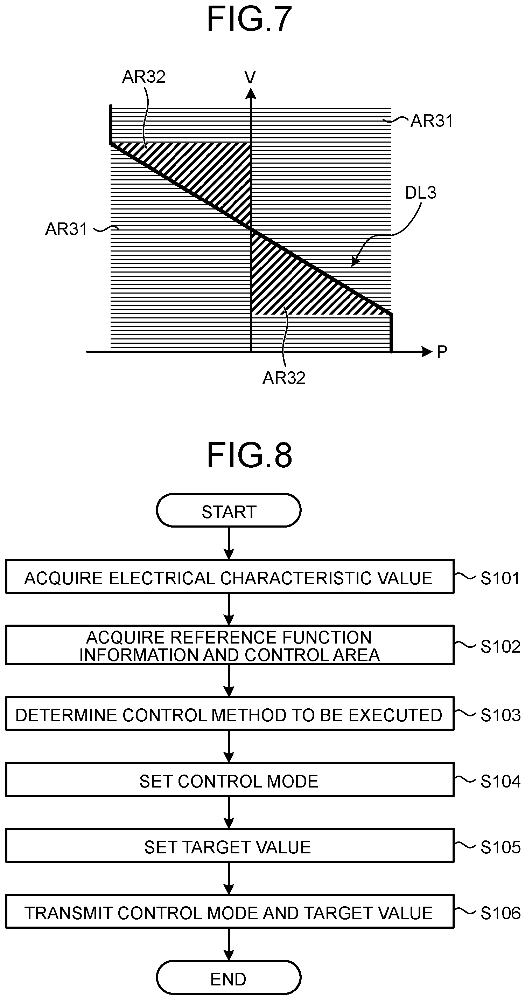

FIG. 7 is a diagram illustrating an example of a reference function and a control area to be the basis for controlling the power converter 14. The reference function represented by a line DL3 bent in the middle in FIG. 7 is composed of three droop functions that have droop characteristics different from one another connected, and are identified by the reference function information.

The control unit 500a of the power control device 54 controls the electrical conversion characteristic of the power converter 14 to be a characteristic of the reference function represented by the line DL3. That is, the control unit 500a of the power control device 54 controls the power converter 14 such that the operating point is positioned on the line DL3.

In the example in FIG. 7, areas AR31 and AR32 are set. The area AR31 is a region in which the droop P control is performed to position the operating point on the line DL3, while the area AR32 is a region in which the droop V control is performed to position the operating point on the line DL3.

### Control Method

Next, the control method of the power converters 11 to 15 and the control method of the power system by the power control devices 51 to 55 will be explained. In the power system 1, a local control in which the power control devices 51 to 55 individually perform an autonomous and distributive control, and a centralized control in which the EMS 40 performs coordinated control of the power control devices 51 to 55 according to a power status of the power system 1 can be executed. For example, the local control is executed repeatedly at relatively short intervals, while the centralized control is executed at intervals longer than the cycle of the local control. The local control is also referred to as primary control, and the centralized control is also referred to as secondary control. These control methods are executed, for example, by a program run by a processor in each power control device or the EMS 40.

### Local Control

First, the control method of the power control devices 51 to 55 in local control will be explained using the power control device 51 as an example. A control method similar to that explained below may also be applied to the other power control devices 52 to 55 appropriately.

In the control method of the power control device 51, the control unit 500a performs a control step of controlling the electrical conversion characteristic of the power converter 11, that is, the electrical conversion characteristic of the power conversion unit 100a, based on the electrical characteristic value, the reference function information, and the control area information. An example of contents of this control step will be further specifically explained referring to the drawings.

FIG. 8 is a flowchart illustrating a flow of processing performed by the control unit 500a. The control unit 500a performs processing illustrated in FIG. 8, for example, in predetermined cycles. First, the control unit 500a acquires the electrical characteristic value received from the power converter 11 by the communication unit 500c (step S101). The electrical characteristic value acquired herein is one example of an input value. Next, the control unit 500a acquires the reference function information and the control area information from the storage unit 500b (step S102).

Next, the control unit 500a determines the control method to be executed based on the acquired electrical characteristic value, the reference function information, and the control area information (step S103). For example, the control unit 500a determines that the control method to be executed is the droop P control when an operating point OP1 identified by the acquired electrical characteristic value is positioned in an area AR11 on a V-P characteristic as indicated in FIG. 5. Moreover, the control unit 500a determines that the control method to be executed is the droop V control when an operating point OP2 identified by the acquired electrical characteristic value is positioned in an area AR12 as indicated in FIG. 5. Furthermore, the control unit 500a determines that the control method to be executed is a control stop when an operating point OP4 identified by the acquired electrical characteristic value is positioned in an area AR13 as indicated in FIG. 5.

Next, the control unit 500a sets the control mode of the power converter 11 based on the determination result at step S103 (step S104). The control unit 500a sets the control mode of the power converter 11 to a constant power mode to simulate the droop P control using the power converter 11 when the control method determined at step S103 is the droop P control. Moreover, the control unit 500a sets the control mode of the power converter 11 to a stop mode when the control method determined at step S103 is the control stop.

Next, the control unit 500a sets the target value of output for the power converter 11 (step S105). The control unit 500a sets a power value P1 of the reference function intersecting with a line drawn along the horizontal axis from the operating point OP1 as the target value of the constant power mode, for example, when the operating point OP1 is positioned in the area AR11 as indicated in FIG. 5. Furthermore, the control unit 500a sets a voltage value V11 of the reference function intersecting with a line drawn along the vertical axis from the operating point OP2 as the target value of a constant voltage mode, for example, when the operating point OP2 is positioned in the area AR12 as indicated in FIG. 5. When the position of an operating point identified by the acquired electrical characteristic value changes from the operating point OP2 to an operating point OP3, the control unit 500a sets the voltage value V12 of the reference function intersecting with a line drawn along the vertical axis from the operating point OP3 as the target value of constant voltage mode. Step S103, step S104, and step S105 are one example of a setting step.

Next, the control unit 500a transmits the control mode set at step S104, and the target value set at step S105 to the power converter 11 (step S106). Step S106 is one example of an output step.

The communication unit 100d of the power converter 11 receives the control mode and the target value transmitted from the power control device 51. The control unit 100c of the power converter 11 outputs the control mode received by the communication unit 100d to the power conversion unit 100a. Moreover, the control unit 100c sets the operation quantity for the PWM control such that a difference between the electrical characteristic value measured by the sensor 100b and the target value received from the power control device 51 is within a predetermined range, and outputs the set operation quantity to the power conversion unit 100a.

Thus, the power converter 11 operates in the constant power mode and controls the output such that the electrical characteristic value of the bus 30 is to be the power value P1 when the received control mode is the constant power mode and the received target value is the power value P1. Moreover, the power converter 11 operates in the constant power mode and controls the output such that the electrical characteristic value of the bus 30 is the voltage value V1 when the received control mode is the constant power mode and the received target value is the voltage value V1. Furthermore, the power converter 11 stops the operation of the power conversion unit 100a when the received control mode is the stop mode.

According to the local control of the present embodiment as explained above, even when the power converter 11 is a commercially available product, it is possible to implement the droop P control or the droop V control as a simulation by transmitting the control mode and the target value to the power converter 11 from the power control device 51. Because the power converter 11 can be a commercially available product, the configuration of the power converter 11 does not become complex, reducing the effort required for manufacturing and maintenance.

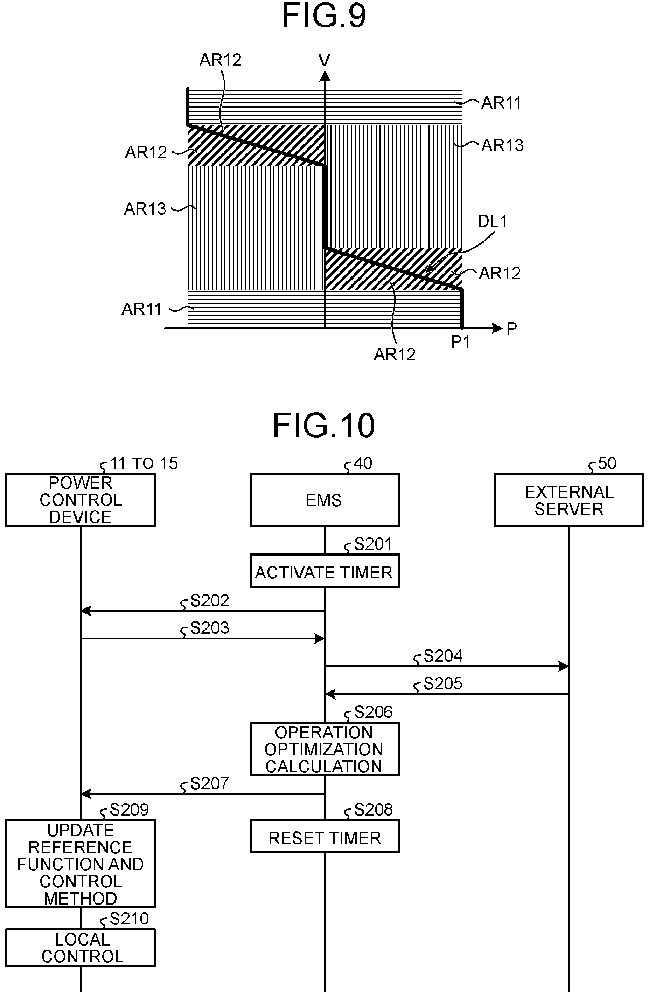

Moreover, in the local control of the present embodiment, because the power control device 51 and the power converter 11 communicate with each other, it takes time to control the target value according to the measurement value from the measurement of the electrical characteristic value of the bus 30. For example, as illustrated in FIG. 9, when the area AR12 is a rectangle region sandwiching the line DL1, the operating point can oscillate when the operating point moves across the line DL1 because it takes time for feedback. On the other hand, in the present embodiment, because the area AR12 is set to suppress the disturbance of the operating point as illustrated in FIG. 5, for example, even if the operating point moves from the area AR12 to the area AR13 across the line DL1, the power converter 11 is turned into the stop mode, thereby suppressing the oscillation of the operating point.

Moreover, for example, if the droop P control is simulated when a control area is not set with the reference function illustrated in FIG. 5, and when the operating point is close to the line DL1 on the vertical axis, the power converter 11 operates under a low load condition. Generally, in the DC/DC conversion, efficiency decreases under a low load condition and, therefore, if the power converter 11 operates at a low load, the overall efficiency of the power network decreases. On the other hand, in the present embodiment, the control area is set as illustrated, and because the control area is set to avoid operation of the power converter 11 at a low load, deterioration of the overall efficiency of the power network can be suppressed.

### Centralized Control

Next, the centralized control will be explained. In the example described below, the EMS 40 performs the centralized control by updating the reference function information and the control area information used by the power control devices 51 to 55 by a command. Updating the reference function information and the control area information by a command means that the command includes the reference function information relating to the reference function and the control area information, and that a part of or an entirety of the reference function and the control area information is updated by the command. The storage unit 500b of each of the power control devices 51 to 55 stores the reference function information and the control area information in an updatable manner.

For example, in the data communication between the EMS 40 and the power control devices 51 to 55, the reference function information and the control area information described above are included in an update command for updating the reference function. The reference function information and the control area information used for this update are stored in the storage unit 42 of the EMS 40, and are read by the control unit 41 to be used.

Next, an example of the control method of the power system 1 by the centralized control will be explained referring to a sequence diagram in FIG. 10. First, the EMS 40 activates a timer in its own device, and start timing (step S201). Subsequently, the EMS 40 requests local measurement information to each of the power control devices 51 to 55 (step S202). The local measurement information is one example of information relating to a power status of the power system 1, and includes a measured electrical characteristic value and a measurement time of the electrical characteristic value by the sensor 100b of each of the power converters 11 to 15.

Next, the power control devices 51 to 55 transmits the local measurement information acquired from the power converter with which each of the power control devices 51 to 55 communicates to the EMS 40 (step S203). The EMS 40 stores the respective local measurement information in the storage unit 42. Next, the EMS 40 requests various kinds of information that can affect the operation of the power system 1 from the external server 60 as an example of the information relating to the power status of the power system 1 (step S204). In this example, the EMS 40 requests power-generation-amount and demand-forecast information from the external server 60. The power-generation-amount and demand-forecast information includes forecast information for a power generation amount in the power system 1 and power-demand forecast information, and may include, for example, information, such as a season, a current weather, and an upcoming weather forecast for a region in which the power system 1 is installed. Moreover, when the external server 60 serves as an EMS of the other power system, the power-generation-amount and demand-forecast information may include forecast information for a power generation amount in the other power system and power-demand forecast information if an operating status of the other power system can affect the operation of the power system 1.

Next, the external server 60 transmits the power-generation-amount and demand-forecast information to the EMS 40 (step S205). The EMS 40 stores the power-generation-amount and demand-forecast information in the storage unit 42.

Next, the control unit 41 of the EMS 40 reads out the transmitted various information, that is, the information relating to the power status of the power system 1 and the like from the storage unit 42, and performs operation optimization calculation of the power system 1 based thereon (step S206). The operation optimization calculation is performed to apply to various conditions. For example, suppose that that the power system 1 is controlled such that the bus 30 operates at an operating point of a predetermined voltage. Suppose that in this state, the EMS 40 has predicted that the weather in the region in which the power element 22 being a photovoltaic system is installed will be clear, and a power generation amount will increase based on the power-generation-amount and demand-forecast information, and has determined that there is a margin in power supply to the power element 22 from the local measurement information acquired from the power converter 12 connected to the power element 22. In this case, the EMS 40 determines to update the reference function of the power control device 51 that controls the power converter 11 connected to the power element 21 such that the power element 21, which is a stationary energy storage system, is charged at the operating point. Moreover, at the same time as the update, the EMS 40 determines to update the reference function of the power control device 54 that controls the power converter 14 connected to the power element 24 so that power is not supplied from the power element 24, which is a commercial power system.

Furthermore, the operation optimization calculation can be performed, set with conditions in terms of ensuring that power from the power element 24, which is a commercial power system, does not exceed the contracted power, and in terms of optimization of electricity costs, such as peak shaving and utilization of nighttime power.

Furthermore, the storage unit 42 of the EMS 40 stores a trained model, and the EMS 40 may perform the operation optimization calculation by using the trained model. As the trained model, a trained model that is generated by deep learning with a neural network using information relating to the power status of the power system 1 and a result of switching or updating the reference function for the power control devices 51 to 55 as training data.

Next, the EMS 40 sets the reference function information and the control area information suitable for a power control device to be updated out of the power control devices 51 to 55 based on the result of the operation optimization calculation, and outputs an update command including the set reference function information and control area information (step S207). Next, the EMS 40 resets the timer (step S208).

Next, the power control device to be updated out of the power control devices 51 to 55 acquires the update command of the reference function and the control area, and updates the reference function information and the control area information (step S209). The power control device that has completed the update of the reference function information and the control area information performs local control (step S210).

### Modification

Although the embodiments of the present invention have been described above, the present invention is not limited to these embodiments and can be implemented in various other forms. For example, the present invention may be implemented by modifying the embodiments described above as follows. Moreover, the embodiments described above and following modifications may be respectively combined. What is configured by combining components of the respective embodiments described above and the respective modifications is also included in the present invention. Furthermore, more effects and modifications can be easily derived by those skilled in the art. Therefore, broader aspects of the present invention are not limited to the embodiments described above and the modifications, and various changes are possible.

In the embodiments described above, instead of using a power value, a current value may be used as the electrical characteristic value, such as a measurement value, a target value, and a control object value. In this case, for example, the reference function is defined as a V-I characteristic that represents a relationship between current (I) and voltage (V). Moreover, for example, a feedback control in which the control unit 500a determines a target current Iref as a target value based on a voltage value Vo and the reference function information, which is the measurement value of voltage by the sensor 100b, and controls such that a difference between the target current Iref and a measurement value Io of current by the sensor 100b falls within an acceptable range is referred to as droop I control also, and is performed instead of the droop P control. When the power control device 51 simulates the droop I control, a vertical axis in the V-I characteristic is voltage, and a horizontal axis is current. The control unit 500a sets the constant current mode as the control mode when the droop I control is performed as a simulation according to the reference function on the V-I characteristic, to output to the power converter 11. The power converter 11 operates in the constant current mode and controls output such that the electrical characteristic value of the bus 30 is to be a current value I1 when the received control mode is the constant current mode and the received target value is the current value I1.

In the embodiment described above, storing the reference function information and the control area information that respectively vary in the storage unit 500b, the reference function information and the control area information to be used for the control of the power converter out of the stored reference function information and the control area information may be switched by a command from the EMS 40.

### Second Embodiment

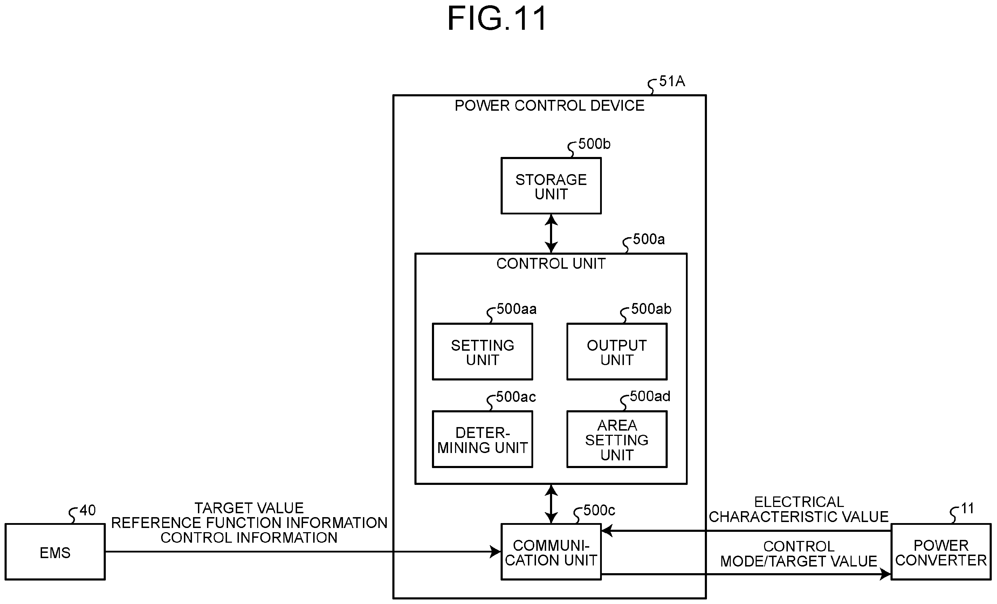

Next, a second embodiment of the present invention will be explained. In the following explanation, components same as those of the first embodiment, which is the embodiment described previously, are denoted by the same reference symbols to omit the explanation, and differences from the first embodiment will be explained. The power system 1 according to the second embodiment includes a power control device 51A in place of the power control device 51. FIG. 11 is a diagram illustrating a configuration of the power control device 51A. The power control device 51A differs from the power control device 51 in a functional unit that is implemented by a processor reading from the storage unit 500b.

The control unit 500a includes a setting unit 500aa, an output unit 500ab, a determining unit 500ac, and an area setting unit 500ad that are functional units implemented as software by execution of a program. The determining unit 500ac determines a control method indicated by the control information transmitted by the EMS 40. The setting unit 500aa sets the control mode of the power converter 11 based on a determination result of the determining unit 500ac, an electrical characteristic value acquired from the power converter 11, a control area set by the area setting unit 500ad, and the like. Furthermore, the setting unit 500aa sets a target value of output of the power conversion unit 100a based on the determination result of the determining unit 500ac, the target value transmitted from the EMS 40, the set control area, and the electrical characteristic value received by the communication unit 500c. The output unit 500ab outputs the control mode set by the setting unit 500aa and the target value to the power converter 11. The aera setting unit 500ad sets the control area to determine the control method of a power converter based on the reference function information stored in the storage unit 500b.

The other power control devices 52 to 55 may have the same configuration as the power control device 51A. However, the reference function information and the target value transmitted from the EMS 40 to the respective power control devices will be different information depending on a connected power element.

### Centralized Control

In the second embodiment, a content of the update command output from the EMS 40 at step S207 in the centralized control and acquired by the power control device 51A differs. Specifically, the update command output from the EMS 40 to the power control device 51A includes the control information, the reference function information, and the target value of output of the power conversion 100a. This control information is information to specify the control method of the power conversion unit 100a, and is set by the operation optimization calculation. As the control method, for example, the droop P control that is an example of the droop control, the droop V control that is an example of the droop control, the constant power control to control an input/output power to be constant, the constant voltage control to control an input/output voltage to be constant, and the constant current control to control an input/output current to be constant are set by the EMS 40. Moreover, the target value is a target value of output of the respective power converters set by the operation optimization calculation.

### Local Control

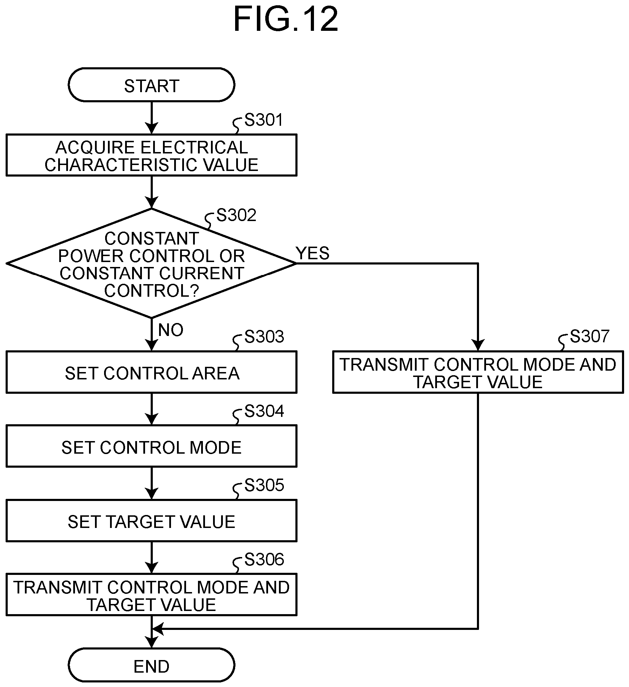

FIG. 12 is a flowchart illustrating a flow of processing performed in the local control by the control unit 500a of the power control device 51A. The control unit 500a performs the processing illustrated in FIG. 12, for example, in predetermined cycles. First, the control unit 500a acquires the electrical characteristic value received from the power converter 11 by the communication unit 500c (step S301). Next, the control unit 500a determines whether the control method indicated in the control information included in the update command output from the EMS 40 at step S207 is the constant power control or the constant current control (step S302).

When the control method indicated by this control information is the constant power control or the constant current control (step S302: YES), the control unit 500a sets the control mode to the constant power mode when the control method indicated by the control information is the constant power control, and sets the control mode to the constant current mode when the control method indicated by the control information is the constant current control, and transmits this set control mode and the target value included in the update command acquired from the EMS 40 to the power converter 11 (step S307).

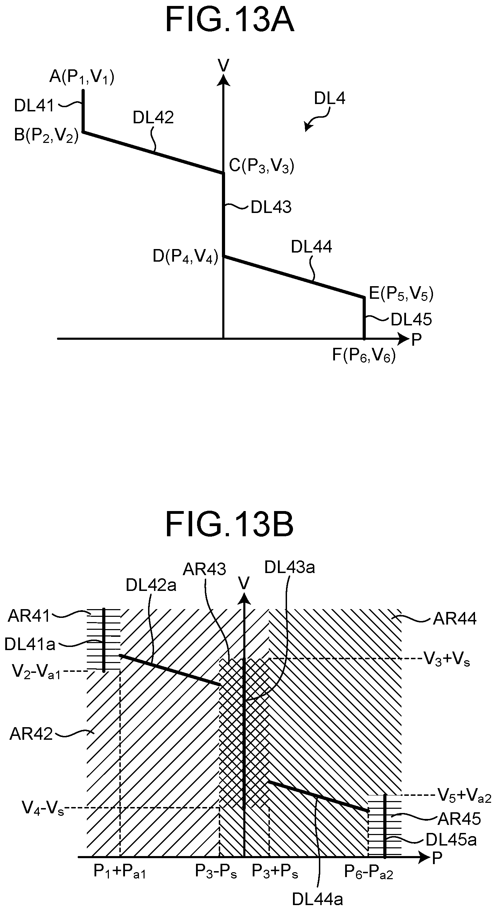

When the control method indicated by this control information is not the constant power control or the constant current control (step S302: NO), that is, when the control method indicated by the control information is the droop P control, the droop V control, or the constant voltage control, the control unit 500a sets the control area based on the reference function information stored in the storage unit 500b (step S303). FIG. 13A is a diagram illustrating an example of the reference function indicated by the reference function information transmitted from the EMS 40 and stored in the storage unit 500b. The reference function represented by a line DL4 bent in the middle illustrated in FIG. 13A is composed of lines DL41 to DL45 connected that are multiple droop functions that are defined according to a range of input value, and that have different droop characteristics from one another. In FIG. 13A, the V-P characteristic that represents a relationship between the power P and the voltage V on the bus 30 side of the power conversion unit 100a included in the power converter 11 is illustrated, and the horizontal axis represents P and the vertical axis represents V. The line DL41 is a line that connects coordinates A (P₁, V₁) and coordinates B (P₂, V₂), the line DL42 is a line that connects coordinates B (P₂, V₂) and coordinates C (P₃, V₃), the line DL43 is a line that connects coordinates C (P₃, V₃) and coordinates D (P₄, V₄), the line DL44 is a line that connects coordinates D (P₄, V₄) and coordinates E (P₅, V₅), and the line DL45 is a line that connects coordinates E (P₅, V₅) and coordinates F (P₆, V₆). On the line DL4, P₁=P₂, P₃=P₄, and P₅=P₆.

FIG. 13B is a diagram illustrating an example in which the control unit 500a sets the lines DL41a to DL45a, which are the reference functions, and the control area based on the line DL4. The control area is set to suppress disturbances in the bus 30 and to avoid low-load operation of the power converter 11.

In the example illustrated in FIG. 13B, the area AR41 including the line DL41a, the area AR42 including the line DL42a, the area AR43 including the line DL43a, the area AR44 including the line DL44a, and the aera AR45 including the line DL45a are set. Moreover, in the example illustrated in FIG. 13B, the line DL41a including the line DL41, the line DL42a including a part of the line DL42, the line DL43a including the line DL43, the line DL44a including a part of line DL44, and the line DL45a including the line DL45 are set.

The area AR41 is a region in which a control of setting the control mode to the constant power mode and of positioning the operating point on the line DL41a is performed, the area AR45 is a region in which a control of setting the control mode to the constant mode and of positioning the operating point on the line DL45a is performed. The area AR42 is a region in which a control of setting the control mode to the constant voltage mode and of positioning the operating point on the line DL42a is performed, and the area AR44 is a region in which a control of setting the control mode to the constant voltage mode and of positioning the operating point on the line DL44a is performed. The area AR43 is a region in which the control mode is set to the stop mode. The control unit 500a sets the area AR43 for a region in which the power converter 11 operates under a low load condition, to avoid the power converter 11 from being operated at a low load. A region in which the voltage is higher than in the area AR43 and a region in which the voltage is lower than in the area AR43 is set to the region in which the control mode is set to the constant voltage mode, considering transient disturbances of the bus 30, control errors of the power converter 11, misdetection of electrical characteristic values in the power converter 11, output errors of the power converter 11, and the like.

In the region of the area AR41, the maximum value of power value is P₁+Pₐ₁, and the minimum value of voltage value is V₂-Vₐ₁. In the region of the area AR42, the maximum value of power value is P₃+Pₛ when the voltage value is higher than in the area AR43, and the maximum value of power value is P₃-Pₛ when the voltage value is lower than in the area AR43. In the region of the area AR43, the maximum value of power value is P₃+Pₛ, and the minimum value of power value is P₃-Pₛ. Moreover, in the region of the area AR43, the maximum value of voltage value is V₃+Vₛ, and the minimum value of voltage value is V₄-Vₛ. In the region of the area AR44, the minimum value of power value is P₃+P_{S} when the voltage value is lower than in the area AR43. In the region of the area AR45, the minimum value of power value is P₆-Pₐ₂, and the maximum value of voltage value is V₅+Vₐ₂. Pₐ₁ and Pₐ₂ are set considering output errors of the power converter 11 with respect to the target value. Pₛ is set to avoid the power converter 11 operating at a low load. Vₐ₁, Vₐ₂, and Vs are set to stabilize the control of the power converter 11.

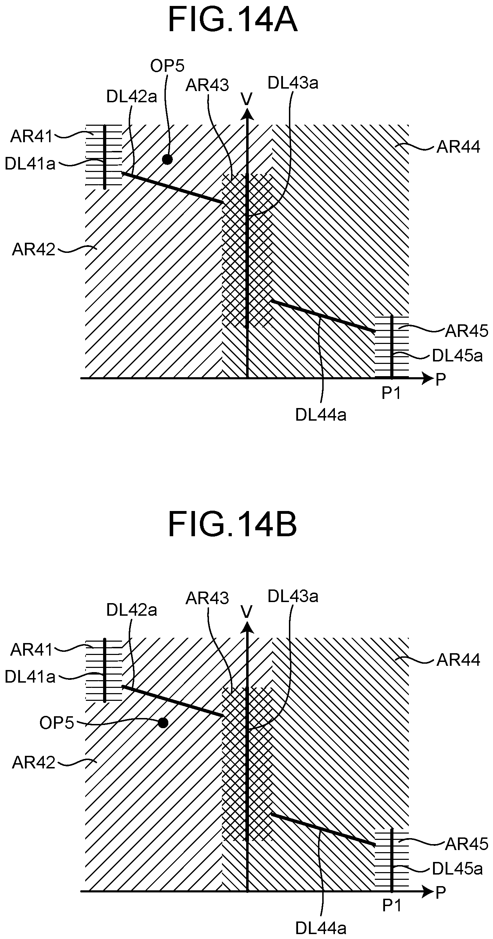

Next, the control unit 500a performs setting of the control mode of the power converter 11 (step S304), and setting of the target value of output of the power converter 11 (step S305). For example, the control unit 500a sets the constant voltage mode as the control mode of the power converter 11 when an operating point OP5 identified by the electrical characteristic value acquired from the power converter 11 has moved from a position on the line DL42 to be positioned in the area AR42 as illustrated in FIG. 14A and FIG. 14B. Moreover, the control unit 500a sets a voltage value at a position at which a line drawn along the vertical axis from the operating point OP 5 intersects with the line DL42 as the target value of the constant voltage mode when the position of the operating point OP5 is at a position indicated in FIG. 14A or FIG. 14B.

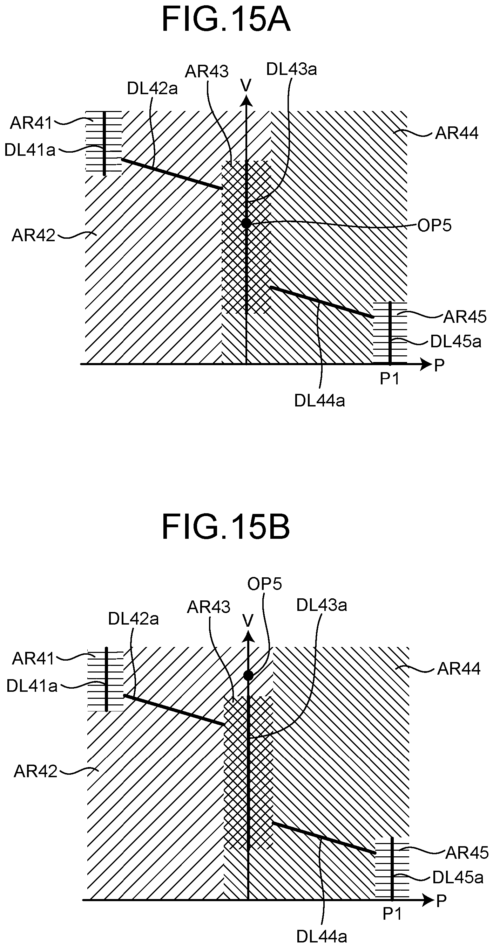

Furthermore, the control unit 500a sets the stop mode as the control mode when the operating point OP5 identified by the acquired electrical characteristic value is positioned in the area AR43 as indicated in FIG. 15A.

Moreover, the control unit 500a sets the constant voltage mode as the control mode when an operating point OP5 identified by the acquired electrical characteristic value has moved from the area AR43 to the area AR42 as illustrated in FIG. 15B. The control unit 500a sets a voltage value at a position at which a line drawn along the vertical axis from the operating point OP5 by extending the line DL42a to the area AR43 intersects with a line extended from the line DL42a as the target value of the constant voltage mode when the position of the operating point OP5 is at a position indicated in FIG. 15B.

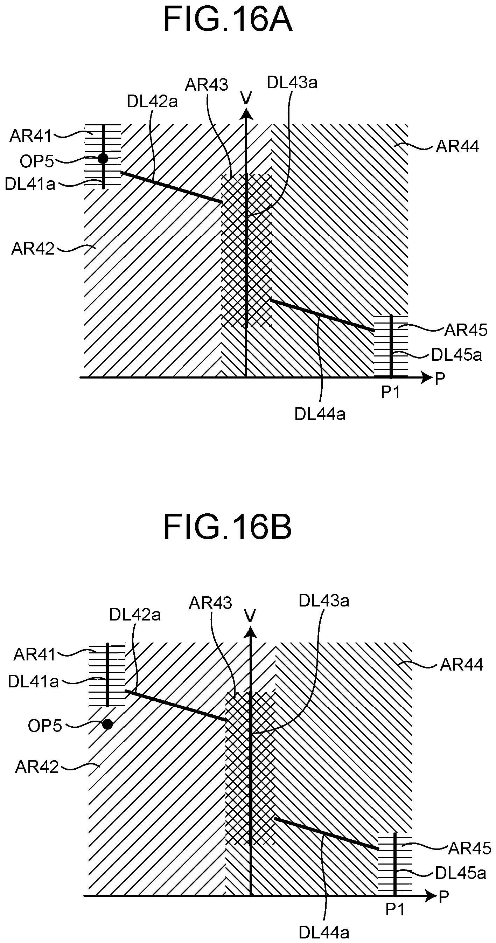

Furthermore, the control unit 500a sets the constant power mode as the control mode when the operating point OP5 identified by the electrical characteristic value is positioned in the area AR41 as indicated in FIG. 16A. The control unit 500a sets a power value at a position at which a line drawn along the horizontal axis from the operating point OP5 intersects with the line DL41 as the target value of the constant power mode when the position of the operating point OP5 is at a position indicated in FIG. 16A.

Moreover, the control unit 500a sets the constant voltage mode as the control mode of the power converter 11 when the position of the operating point OP5 is at a position indicated in FIG. 16B. The control unit 500a sets a voltage value at a position at which a line drawn along the vertical axis from the operating point OP5 intersects with an extended line of the line DL42a to the area AR41 as the target value of the constant voltage mode when the position of the operating point OP5 is at a position indicated in FIG. 16B.

The control unit 500a transmits the control mode set at step S304 and the target value set at step S305 to the power converter 11 (step S306). The power converter 11 receives the control mode and the target value transmitted from the power control device 51A, and controls output such that the electrical characteristic value is to be the target value based on the received control mode and target value similarly to the embodiments described above.

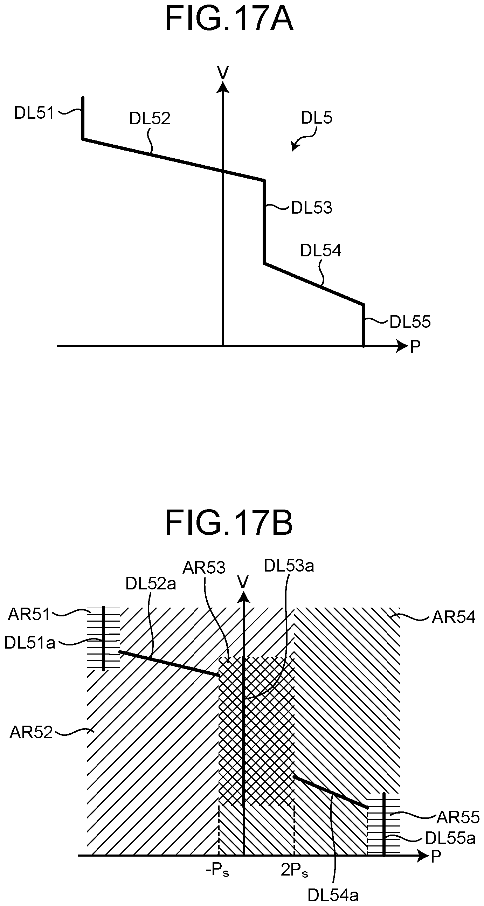

The reference function and the control area are not limited to those indicated in FIG. 13A and FIG. 13B, and the control area is also set according to the reference function also in the case of other reference functions. FIG. 17A illustrates an example of the reference function indicated by the reference function information. The reference function represented by the line DL5 in FIG. 17A is composed of the lines DL51 to DL55, which are multiple droop functions, that have droop characteristics different from one another defined according to a region of an input value connected. When the reference function is line DL5 indicated in FIG. 17A, the control unit 500a sets lines DL51a to DL55a being the reference functions and areas AR51 to AR55 based on line DL5, as illustrated in FIG. 17B.

In the example illustrated in FIG. 17B, the area AR51 including the line DL51a, the area AR52 including the line DL52a, the area AR53 including the line DL53a, the aera AR54 including the line DL54a, and the area AR55 including the line DL55a are set. Moreover, in the example illustrated in FIG. 17B, the line DL51a including the line DL51, the line DL52a including a part of the line DL52, the line DL53a on the V axis, the line DL54a including a part of the line DL54, and the line DL55a including the line DL55 are set.

The area AR51 is a region in which a control of setting the control mode to the constant power mode, and of positioning the operating point on the line DL51a is performed, and the area AR55 is a region in which a control of setting the control mode to the constant power mode, and of positioning the operating point on the line DL55a is performed. The area AR52 is a region in which a control of setting the control mode to the constant voltage mode, and of positioning the operating point on the line DL52a is performed, and the area AR54 is a region in which a control of setting the control mode to the constant voltage mode, and of positioning the operating point on the line DL54a is performed. The aera AR54 is a region in which the control mode is set to the stop mode.

The control unit 500a sets, when the reference function is the line DL5, the control mode to the stop mode in the aera AR53 in a region in which the power converter 11 operates at a low load to avoid the power converter 11 from being operated at a low load. When the minimum value of power value of the area AR53 is -Pₛ, the maximum value of power value of the aera AR53 is set to 2Pₛ.

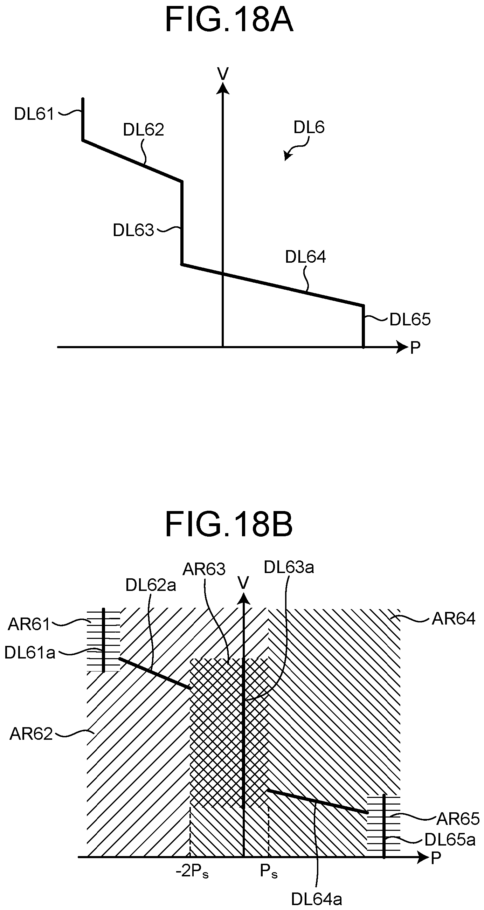

FIG. 18A illustrates an example of the reference function indicated by the reference function information. The reference function represented by the line DL6 in FIG. 18A is composed of lines DL61 to DL65, which are multiple droop functions that have droop characteristics different from one another defined according to a region of an input value connected. The control unit 500a sets lines DL61a to DL65a, which are the reference functions, and areas AR61 to AR65 based on the line DL6 as illustrated in FIG. 18B, for example, when the reference function is the line DL6 indicated in FIG. 18A.

In the example illustrated in FIG. 18B, the area AR61 including the line DL61a, the area AR62 including the line DL62a, the area AR63 including the line DL63a, the area AR64 including the line DL64a, and the aera AR65 including the line DL65a are set. Moreover, in the example illustrated in FIG. 18B, the line DL61a including the line DL61, the line DL62a including a part of the line DL62, the line DL63a on the V axis, the line DL64a including a part of the line DL64, and the line DL65a including the line DL65 are set.

The area AR61 is a region in which the control mode is set to the constant power mode, and a control of positioning the operating point on the line DL61a is performed, and, the area AR65 is a region in which the control mode is set to the constant power mode, and a control of positioning the operating point on line DL65a is performed. The area AR62 is a region in which the control mode is set to the constant voltage mode, and a control of positioning the operating point on the line DL62a is performed, and the area AR64 is a region in which the control mode is set to the constant voltage mode, and a control of positioning the operating point on the line DL64a is performed. The area AR63 is a region in which the control mode is set to the stop mode.

The control unit 500a sets the control mode to the stop mode in the area AR63 for a region in which the power converter 11 operates at a low load, to avoid the power converter 11 from being operated at a low load when the reference function is the line DL6. When the maximum value of power value of the area AR63 is Pₛ, the minimum value of power value of the area AR53 is set to -2Pₛ.

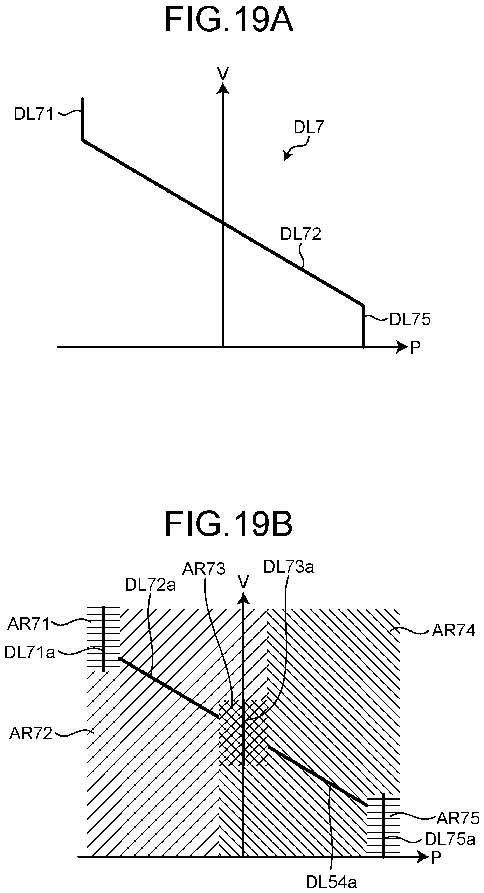

FIG. 19A illustrates an example of the reference function indicated by the reference function information. The reference function represented by the line DL 7 indicated in FIG. 9 is composed of a line DL71, a line DL72, and a line DL75 that are multiple droop functions having different droop characteristics from one another defined according to a region of an input value connected. The control unit 500a sets lines DL71a to DL75a, which are the reference functions, and areas AR71 to AR75 based on the line DL7 as illustrated in FIG. 19B, for example, when the reference function is the line DL7 indicated in FIG. 19A.

In the example illustrated in FIG. 19B, the area AR71 including the line DL71a, the aera AR72 including the line DL72a, the area AR73 including the line DL73a, the area AR74 including the line DL74a, and the aera AR75 including the line DL75a are set. Moreover, in the example illustrated in FIG. 19B, the line DL71a including the line DL71, the line 72a including a part of the line DL72, the line DL63a set on the V axis, the line DL74a including a part of the line DL72, and the line DL75a including the line DL75 are set.

The area AR71 is a region in which the control mode is set to the constant power mode, and a control of positioning the operating point on the line DL71a is performed, and the area AR75 is a region in which the control mode is set to the constant power mode, and a control of positioning the operating point on the line DL75a is performed. The area AR72 is a region in which the control mode is set to the constant voltage mode, and a control of positioning the operating point on line DL72a is performed, and the area AR74 is a region in which the control mode is set to the constant voltage mode, and a control of positioning the operating point on the line DL74a is performed. The area AR73 is a region in which the control mode is set to stop mode.

When the reference function is the line DL7, the control unit 500a sets the line DL73a and the area AR73 for region in which the power converter 11 operates at a low load, to avoid the power converter 11 from being operated at a low load, and the control mode is set to stop mode when the operating point is positioned in the area AR73.

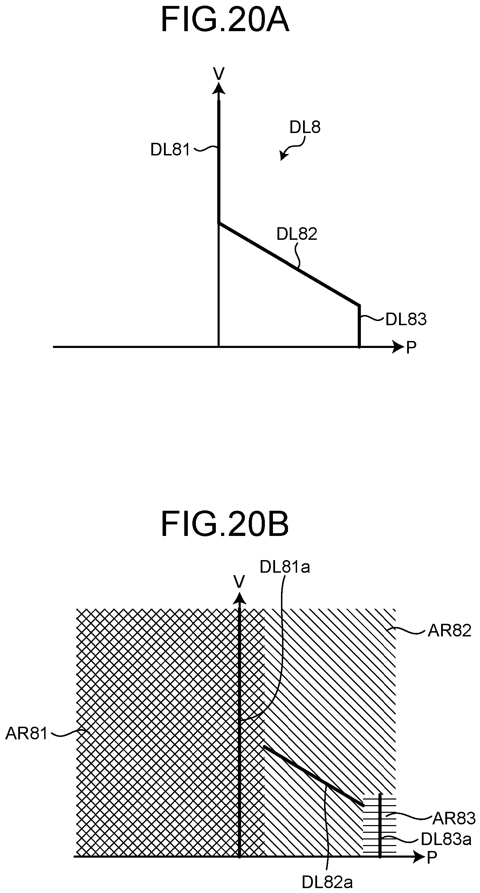

FIG. 20A illustrates an example of the reference function indicated by the reference function information. The reference function represented by the line DL8 indicated in FIG. 20A is composed of lines DL81 to DL83, which are multiple droop functions, that have different droop characteristics from one another defined according to a region of an input value connected. The control unit 500a sets lines DL81a to DL83a, which are the reference functions, and areas AR81 to AR83 based on the line DL8 as illustrated in FIG. 20B, for example, when the reference function is the line DL8 indicated in FIG. 20A.

In the example illustrated in FIG. 20B, the area AR81 including the line DL81a, the area AR82 including the line DL82a, and the area AR83 including the line DL83a are set. Moreover, in the example illustrated in FIG. 20B, the line DL81a including the line DL81 set on the V axis, the line DL82a including a part of the line DL82, and the line DL83a including the line DL83 are set.

The area AR83 is a region in which the control mode is set to the constant power mode, and a control of positioning the operating point on the line DL83a is performed. The area AR82 is a region in which the control mode is set to the constant voltage mode, and a control of positioning the operating point on the line DL82a is performed. The area AR81 is a region in which the control mode is set to the stop mode.

The control unit 500a sets, when the reference function is the line DL8, the area AR81 for a region in which the power value is negative and a region in which the power converter 11 operates at a low load, and sets the control mode to the stop mode when the operating point is positioned in the area AR81.

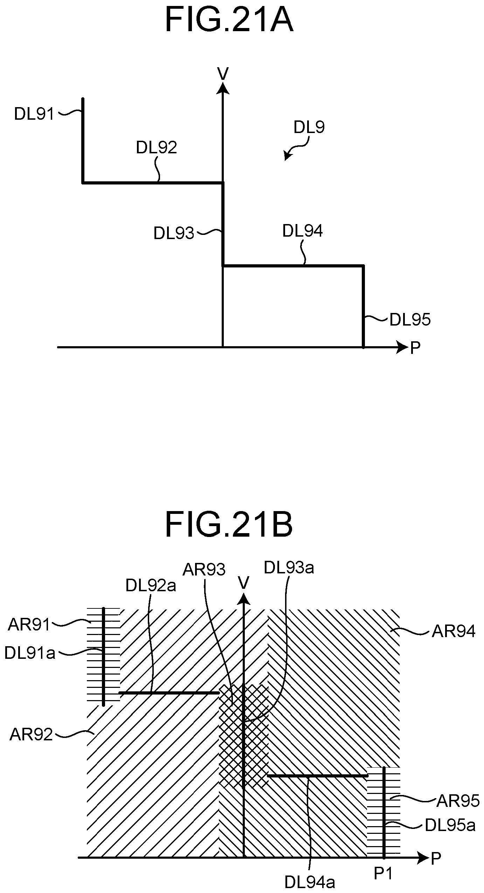

FIG. 21A illustrates an example of the reference function indicated by the reference function information. The reference function represented by the line DL9 indicated in FIG. 21A is composed of a line DL91 indicating a constant power, a line DL92 indicating a constant voltage, a line DL93 indicating a constant power, a line DL94 indicating a constant voltage, and a line DL95 indicating a constant power defined according to a region of an input value connected. The control unit 500a sets lines DL91a to DL95a, which are the reference functions, and areas AR91 to AR95 based on the line DL9 as illustrated in FIG. 21B when the reference function is the line DL9 indicated in FIG. 21A.

In the example illustrated in FIG. 21B, the area AR91 including the line DL91a, the area AR92 including the line DL92a, the area AR93 including the line DL93a, the area AR94 including the line DL94a, and the aera AR95 including the line DL95a are set. Moreover, in the example illustrated in FIG. 21B, the line DL91a including the line DL91, the line DL92a including a part of the line DL92, the line DL93a including the lined DL93, the lined DL94a including a part of the line DL94, and the line DL95a including the line DL95 are set.

The area AR91 is a region in which the control mode is set to the constant power mode, and a control of positioning the operating point on the line DL91a is performed, the area AR95 is a region in which the control mode is set to the constant power mode, and a control of positioning the operating point on the line DL95a is performed. The area AR92 is a region in which the control mode is set to the constant voltage mode, and a control of positioning the operating point on the line DL92a is performed, and the area AR94 is a region in which the control mode is set to the constant voltage mode, and a control of positioning the operating point on the line DL94a is performed. The area AR93 is a region in which the control mode is set to the stop mode.

The control unit 500a sets the control mode to the stop mode in the area AR93 for a region in which the power converter 11 operates at a low load, to avoid the power converter 11 from operating at a low load, when the reference function is the line DL9.

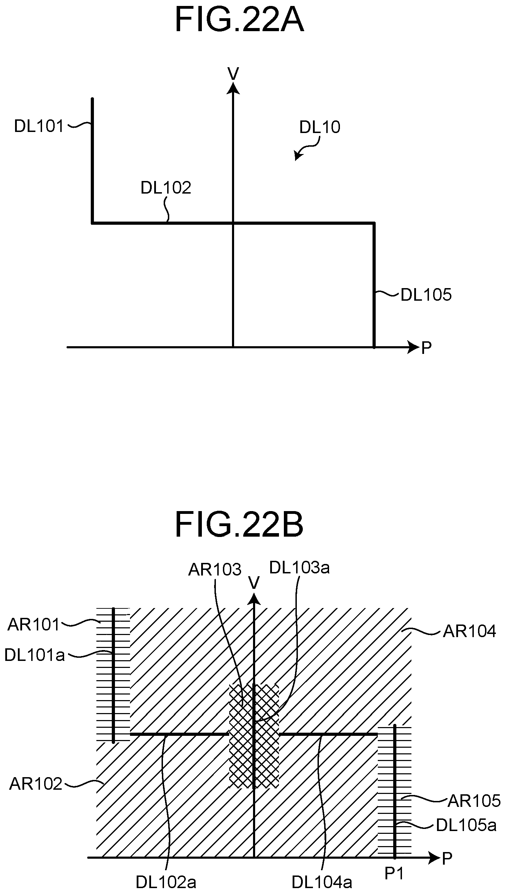

FIG. 22A illustrates an example of the reference function indicated by the reference function information. The reference function represented by the line DL10 indicated in FIG. 22A is composed of a line DL101 indicating a constant power, a line DL102 indicating a constant voltage, and a lined DL105 indicating a constant power defined according to a region of an input value connected. The control unit 500a sets lines DL101a to DL105a, which are the reference functions, and areas AR101 to AR105 based on the line DL10 as illustrated in FIG. 22B, when the reference function is the line DL10 indicated in FIG. 22A.

In the example illustrated in FIG. 22B, the area AR101 including the line DL101a, the area AR102 including the line DL102a, the area AR103 including the line DL103a, the aera AR104 including the line DL104a, and the area AR105 including the line DL105a are set. Moreover, in the example illustrated in FIG. 22B, the line DL01a including the line DL101, the line 102a including a part of the line DL102, the line DL103a set on the V axis, the line DL104a including a part of the line DL102, and the line DL105a including the line DL105 are set.

The aera AR101 is a region in which the control mode is set to the constant power mode, and a control of positioning the operating point on the line DL101a is performed, and the aera AR105 is a region in which the control mode is set to the constant mode, and a control of positioning the operating point on the line DL105a is performed. The area AR102 is a region in which the control mode is set to the constant voltage mode, and a control of positioning the operating point on the line DL102a is performed, and the area AR104 is a region in which the control mode is set to the constant voltage mode, and a control of positioning the operating point on the line DL104 is performed. The area AR103 is a region in which the control mode is set to the stop mode.

When the reference function is DL10, the control unit 500a sets the line DL103a and the aera AR103 for a region in which the power converter 11 operates at a low load, to avoid the power converter 11 from operating at a low load, and sets the control mode to the stop mode when the operating point is positioned in the area AR73.

When the reference function is defined as the V-I characteristic, which represents the relationship between current (I) and voltage (V), in the control information, the droop I control is set instead of the droop V control, and the constant current control is set instead of the constant voltage control. When the control information indicates constant current control, the control unit 500a sets the control mode to constant current mode and transmits the set control mode and the target value of current included in the update command received from the EMS 40, to the power converter 11. Furthermore, when the reference function is defined as a V-I characteristic, the control unit 500a sets the control area in which where the control mode is set to the constant power mode, the control area in which the control mode is set to the constant current mode, and the control mode in which the control area is set to the stop mode.

### Industrial Applicability

The present invention is applicable to a power control device, a power system, a control method of a power control device, and a control method of a central control device.

### Reference Signs List

1 POWER SYSTEM
11, 12, 13, 14, 15 POWER CONVERTER
21, 22, 23, 24, 25 POWER ELEMENT
30 BUS
40 EMS
41, 100c, 500a CONTROL UNIT
42, 500b STORAGE UNIT
43, 100d, 500c COMMUNICATION UNIT
51, 52, 53, 54, 55 POWER CONTROL DEVICE
60 EXTERNAL SERVER
100a POWER CONVERTER
100b SENSOR
100ca OPERATION-QUANTITY SETTING UNIT
100cb INFORMATION PROVIDING UNIT
500aa SETTING UNIT
500ab OUTPUT UNIT
AR11, AR12, AR13, AR21, AR22, AR31, AR32 AREA
DL1, DL2, DL3 LINE
EV ELECTRIC VEHICLE
NW NETWORK
OP1, OP2, OP3, OP4 OPERATING POINT

## Claims

1. A power control device for controlling a power converter configured to convert an input power to output, the power control device comprising:
a setting unit configured to
set a control mode of the power converter to either one of a constant voltage control, a constant current control, a constant power control, and an output stop according to an input value, and
set a target value of output of the power converter corresponding to the control mode based on the control mode and a reference function defined according to an input value; and
an output unit configured to output the control mode set by the setting unit and the target value set by the setting unit to the power converter.

2. The power control device according to claim 1, wherein
the setting unit is configured to set the control mode based on a control area a control area defining a range of voltage, current, and power for performing any one of the constant voltage control, the constant current control, the constant power control, and the output stop corresponding to the reference function based on an input value, and
the control area is set to suppress a disturbance of the input value.

3. The power control device according to claim 2, wherein
the control area is defined to suppress reduction of efficiency of the power converter.

4. The power control device according to claim 3, wherein
the setting unit is configured to suppress the reduction of efficiency of the power converter by setting the control mode to the output stop.

5. The power control device according to claim 1, further comprising
a communication unit configured to acquire control information indicating a control method of the power converter from an external device, and a target value of output of the power converter, wherein
when the control method indicated by the control information is either the constant power control or the constant current control, the setting unit is configured to set the control mode to the control method indicated by the control information, and the output unit is configured to output the target value acquired by the communication unit and the set control mode to the power converter.

6. The power control device according to claim 5, further comprising
an area setting unit configured to set a control area defining a range of voltage, current, and power for performing any one of the constant voltage control, the constant current control, the constant power control, and the output stop corresponding to the reference function based on an input value, wherein
when the control method indicated by the control information is the constant voltage control, the setting unit is configured to set a control mode defined in the control area corresponding to the target value and a target value determined based on the reference function, and the output unit is configured to output the set control mode and the target value to the power converter.

7. A power system comprising:
the power control device according to any one of claims 1 to 6; and
a power converter configured to
acquire the control mode and the target value from the power control device,
perform a control according to the acquired control based on the acquired target value when the acquired control mode is any one of the constant voltage control and the constant power control, and
stop output when the control mode is the output stop.

8. A control method of a power control device for converting an input power to output, the method comprising:
a setting step of
setting a control mode of the power converter to either one of a constant voltage control, a constant current control, a constant power control, and an output stop according to an input value, and
setting a target value of output of the power converter corresponding to the control mode based on the control mode and a reference function defined according to an input value; and
an output step of outputting the control mode set at the setting step and the target value set at the setting step to the power converter.

9. A control method of a central control device for controlling a power control device of a power converter configured to convert an input power to output, wherein
the power control device includes a setting unit configured to
set a control mode of the power converter to either one of a constant voltage control, a constant current control, a constant power control, and an output stop according to an input value, and
set a target value of output of the power converter corresponding to the control mode based on the control mode and a reference function defined according to an input value; and
an output unit configured to output the control mode set by the setting unit and the target value set by the setting unit to the power converter, the method comprising
a step of outputting the reference function to the power control device by the central control device.
